# FASCICULE DE BREVET EUROPEEN

(11) **EP 3 121 114 B1**
(45) Date de publication et mention de la délivrance du brevet: **27.06.2018**
(21) Numéro de dépôt: 16177765.1
(22) Date de dépôt: 04.07.2016
(51) Int. Cl.: B64C 1/14, B64C 1/24, B64C 1/26, B64C 35/00

(54) **AERONEF COMPORTANT UNE AILETTE DE FUSELAGE**
LUFTFAHRZEUG, DAS EINEN RUMPFFLÜGEL UMFASST
AN AIRCRAFT INCLUDING A FUSELAGE SPONSON

(30) Priorité: 20.07.2015 FR 1501537
(43) Date de publication de la demande: 25.01.2017
(73) Titulaire: Airbus Helicopters, 13725 Marignane Cedex (FR)
(72) Inventeur: ALFANO, David, 13090 Aix en Provence (FR); LEGRAS, Guillaume, 13250 Saint Chamas (FR); NICOLA, Jean, 13127 Vitrolles (FR)
(74) Mandataire: GPI & Associés

(56) Documents cités:
- GB-A- 2 342 635
- US-A- 2 448 075
- US-B1- 6 189 833

## Description

La présente invention concerne un aéronef équipé d'au moins une ailette de fuselage, une telle ailette étant également couramment désignée en langue anglaise par le terme de "sponson". Telle que représentée dans les documents US 2 448 075 ou GB 2342 635, une telle ailette de fuselage est généralement agencée longitudinalement sur un flanc latéral d'un corps principal de fuselage. Ce type d'ailette permet en outre d'augmenter la flottabilité de l'aéronef dans le cas par exemple d'un hydravion ou encore plus généralement de loger et de protéger des organes d'un aéronef.

Les organes de l'aéronef ainsi protégés par l'ailette peuvent par exemple être formés par des trains d'atterrissage arrière, des systèmes flottants notamment gonflables, des feux de position ou d'éclairage et/ou des réservoirs de carburant pour alimenter en carburant au moins un moteur de l'aéronef.

De plus, une telle ailette peut également être utilisée comme marchepied et est par conséquent conçue pour permettre à une personne de monter dessus par exemple pour faciliter la maintenance de l'aéronef.

Enfin, une ailette de fuselage présente également des caractéristiques dimensionnelles et de formes visant à optimiser l'aérodynamisme de l'aéronef et notamment permettant de limiter l'impact aérodynamique de l'ailette. Les formes de l'ailette sont donc adaptées pour limiter l'augmentation du coefficient trainée aérodynamique engendrée par une telle protubérance émergeant du corps principal de fuselage d'autant plus que la surface de frottement de l'ailette par l'air génère aussi une augmentation de trainée.

De façon générale, les aéronefs équipés de telles ailettes de fuselage peuvent également comporter des portes latérales coulissantes, mobiles en translation pour l'ouverture généralement vers l'arrière le long du corps principal du fuselage. Il peut alors dans ce cas se produire une interférence entre la porte coulissante et l'ailette de fuselage agencée longitudinalement sur un flanc de l'aéronef.

Pour palier à cette interférence entre l'ailette et la porte coulissante, plusieurs solutions ont été envisagées.

Une première solution consiste à réaliser un évidement en partie basse de la porte coulissante de manière à éviter l'interférence avec l'ailette lors de l'ouverture de la porte. Cet évidement peut alors, pour certaines applications, être comblé par une portion basculante de la porte apte à basculer vers le bas en étant mobile en rotation autour d'un axe sensiblement horizontal. Une telle portion basculante de la porte est donc disjointe d'une portion coulissante de la porte. Un tel exemple de porte avec évidement a notamment été décrit dans le document US 6 189 833.

Une telle première solution au problème d'interférence n'est cependant pas optimale pour le confort acoustique et thermique des occupants de l'aéronef. En effet, avec une portion de porte inférieure basculante vers le bas, et à tout le moins, lorsque l'évidement en partie basse n'est pas comblé, l'étanchéité de l'habitacle est impossible à garantir. Une nuisance sonore et un inconfort thermique peuvent donc être engendrés par ce type de porte avec évidement en partie basse.

Une deuxième solution, d'ores et déjà envisagée, consiste à réaliser dans l'ailette une échancrure permettant le libre passage de la porte coulissante entre le corps principal du fuselage et une partie de l'ailette.

Dans ce cas, une telle échancrure peut présenter différentes formes correspondant à différentes réalisations de cette deuxième solution. Ainsi, selon une réalisation, l'échancrure peut s'étendre verticalement sur toute la hauteur de l'ailette.

Cette réalisation est cependant problématique car elle engendre une augmentation de la trainée aérodynamique importante pour l'aéronef. Elle ne garantit donc pas des caractéristiques aérodynamiques optimales à une telle ailette de fuselage.

Selon une autre réalisation, et par analogie, l'échancrure peut s'étendre horizontalement sur toute la longueur de l'ailette.

Lors du déplacement de l'aéronef, il peut alors se former des tourbillons importants dans le flux d'air dévié par l'ailette. Ces tourbillons sont en outre très problématiques car ils peuvent interagir de façon dangereuse avec les organes aérodynamiques arrière de l'aéronef. Ces organes arrière sont par exemple formés par des ailes ou des ailerons, des plans de stabilisation, des stabilisateurs horizontaux ou verticaux ou des pales d'un rotor arrière dans le cas particulier d'un giravion. Une telle réalisation peut ainsi, dans certains cas, engendrer des pertes de rendement importantes dues aux organes aérodynamiques arrière de l'aéronef et donc être préjudiciable aux caractéristiques aérodynamiques de l'aéronef affectant les performances de cet aéronef.

Enfin une dernière réalisation connue consiste à orienter l'ouverture de la porte coulissante longitudinalement vers l'avant de l'aéronef, ou autrement dit, dans une direction opposée à celle de l'ailette.

Si une telle réalisation semble répondre aux contraintes aérodynamiques et de confort acoustique, elle n'est cependant pas compatible avec toutes les architectures d'aéronef. En effet, certains aéronefs ne comportent pas une longueur suffisante pour permettre une telle ouverture vers l'avant d'une porte coulissante. C'est notamment le cas des aéronefs présentant directement à l'avant de la porte coulissante une porte avant permettant l'accès à un cockpit de pilotage de l'aéronef.

La présente invention a alors pour objet de proposer un aéronef comportant une ailette de fuselage permettant de s'affranchir des limitations mentionnées ci-dessus. Une telle ailette permet en outre une ouverture de porte coulissante de l'aéronef vers l'arrière tout en garantissant un confort acoustique et thermique dans l'aéronef et une optimisation quant à l'augmentation de trainée aérodynamique résultante ou quant à l'interaction avec les organes aérodynamiques arrière de l'aéronef.

L'invention concerne donc un aéronef comportant un corps principal d'un fuselage et au moins une porte latérale coulissante apte à se déplacer en translation selon une direction longitudinale D, cette porte latérale coulissante étant mobile entre une position fermée agencée vers une partie avant du corps principal du fuselage et une position ouverte agencée vers une partie arrière du corps principal du fuselage.

Un tel aéronef comporte également au moins une ailette émergeant transversalement du corps principal du fuselage et sensiblement perpendiculairement par rapport à un plan antéropostérieur vertical de symétrie P du corps principal du fuselage lorsque l'aéronef est posé sur un support horizontal. En outre, une telle ailette comporte une échancrure réduisant localement une section transversale de l'ailette dans une zone de liaison de l'ailette, cette zone de liaison étant agencée à proximité immédiate du corps principal du fuselage de l'aéronef d'où l'ailette émerge transversalement.

Une telle échancrure est ainsi ouverte au moins au niveau d'une face externe avant et d'une face externe supérieure de l'ailette permet de recevoir une portion inférieure d'une porte latérale coulissante agencée en position ouverte.

Une tel aéronef est remarquable en ce que l'échancrure de l'ailette comporte :
- une face interne inférieure orientée sensiblement horizontalement lorsque l'aéronef est posé sur un support horizontal et débouchant au niveau de la face externe avant de l'ailette,
- une face interne inclinée vers l'arrière du fuselage de l'aéronef et s'entendant entre la face interne inférieure et la face externe supérieure de l'ailette, et
- une cloison interne agencée sensiblement parallèlement au corps principal en regard, et coopérant, d'une part avec la face interne inférieure et la face interne inclinée et, d'autre part avec la face externe avant et la face externe supérieure de l'ailette.

Autrement dit, un tel aéronef conforme à l'invention est équipé d'une ailette comportant une échancrure qui ne s'étend que partiellement dans le corps de l'ailette verticalement selon un axe Z d'élévation lorsque l'aéronef se pose horizontalement sur le sol, et longitudinalement selon un axe X longitudinal d'un trièdre rectangle XYZ où le plan XZ est parallèle au plan antéropostérieur vertical de symétrie P du corps principal du fuselage de l'aéronef . L'axe X est donc parallèle au plancher de la cabine de l'aéronef, c'est à dire sensiblement parallèle au sol quand l'aéronef est posé, et perpendiculaire à l'axe Z. En outre, la direction longitudinale D du déplacement en translation de la porte est sensiblement parallèle à l'axe X.

Par ailleurs, l'axe Y transversal est quant à lui perpendiculaire au plan P. Conformément à l'invention, l'ailette de fuselage émerge alors du corps principal du fuselage selon une direction transversale parallèle à l'axe Y.

La face interne inclinée vers l'arrière permet alors de limiter l'impact d'une telle échancrure sur le coefficient de trainée aérodynamique de l'aéronef c'est à dire suivant l'axe X. Elle permet en outre d'éviter la formation d'une poche d'eau de pluie ou d'accumulation de neige dans cette échancrure.

Par ailleurs, les faces internes et la cloison interne de l'échancrure forment un carénage fermé permettant d'éviter qu'un flux d'air extérieur ne pénètre à l'intérieur du volume interne défini par l'ailette de fuselage.

Avantageusement, la face interne inclinée peut être inclinée par rapport à la face interne inférieure d'un angle résultant moyen α compris entre 120° et 150° mesuré dans un plan sensiblement parallèle au plan antéropostérieur vertical de symétrie P.

En d'autres termes, la face interne inclinée forme avec la face interne inférieure un angle obtus permettant de limiter l'augmentation du coefficient de trainée aérodynamique engendré par cette échancrure.

En outre, si une section longitudinale de la face interne inférieure est sensiblement rectiligne selon la direction de coulissement de la porte parallèle à l'axe X, une section longitudinale de la face interne inclinée peut quant à elle présenter différentes formes, correspondant à différentes alternatives pour la face interne inclinée sans pour autant sortir du champ de l'invention.

Par section longitudinale de la face interne inclinée, on entend une section de la face interne inclinée dans un premier plan de coupe C1 sensiblement parallèle au plan XZ longitudinal. Autrement dit, une telle section longitudinale d'une face interne inclinée de l'échancrure est une courbe plane formée par l'intersection entre le plan de coupe C1 et la face interne inclinée de l'échancrure.

De même, une section longitudinale d'une face interne inférieure de l'échancrure est une courbe plane formée par l'intersection entre le premier plan de coupe C1 et la face interne inférieure de l'échancrure.

Ainsi selon une première alternative, la face interne inclinée de l'échancrure peut comporter une section longitudinale de forme rectiligne.

Dans ce cas, l'angle α est formé directement dans le premier plan de coupe C1 par l'angle séparant deux directions définies l'une par la section longitudinale de la face interne inférieure et l'autre par la section longitudinale de la face interne inclinée.

Selon une deuxième alternative, la face interne inclinée de l'échancrure peut comporter une section longitudinale de forme concave.

Dans ce cas, l'angle α est formé dans le plan de coupe C1 par l'angle séparant deux directions définies l'une par la section longitudinale de la face interne inférieure et l'autre par une droite moyenne des points définissant la forme concave de la section longitudinale de la face interne inclinée.

Selon une troisième alternative, la face interne inclinée de l'échancrure peut comporter une section longitudinale de forme complexe.

Une telle forme complexe peut notamment comporter des points d'inflexion et par exemple présenter une forme sinusoïdale. De même que pour la seconde alternative, l'angle α est formé dans le premier plan de coupe C1 par l'angle séparant deux directions définies par la section longitudinale de la face interne inférieure et par une droite moyenne des points définissant la forme complexe de la section longitudinale de la face interne inclinée.

En pratique, l'échancrure peut présenter une profondeur b, selon un axe Z vertical, comprise entre 25% et 95% de la hauteur totale H selon l'axe Z de l'ailette au niveau d'une autre section longitudinale de l'ailette excluant l'échancrure.

Cette autre section longitudinale relative à l'ailette excluant l'échancrure est donc une surface plane formée par l'intersection entre l'ailette et un second plan de coupe C2 parallèle au premier plan de coupe C1. Un tel second plan de coupe C2 est par ailleurs distant du premier plan de coupe C1 d'une valeur telle que le second plan de coupe C2 soit agencé en dehors de l'échancrure.

De plus, une telle profondeur de l'échancrure est mesurée selon une direction sensiblement verticale définie par l'axe Z du trièdre rectangle XYZ. Une telle valeur pour la profondeur de cette échancrure permet alors également de participer à la réduction de l'impact de la présence d'une échancrure sur le coefficient de trainée aérodynamique de l'aéronef suivant l'axe X. Typiquement, une profondeur correspondant à 80% de la hauteur totale H de l'ailette permet d'optimiser cette augmentation du coefficient de trainée.

Avantageusement, l'échancrure peut présenter, au moins au niveau de la face externe avant de l'ailette, une largeur, selon un axe Y transversal, comprise entre 100mm et 350mm.

Comme déjà évoqué, un tel axe Y est perpendiculaire au plan antéropostérieur vertical de symétrie P du corps principal du fuselage.

Cette largeur de l'échancrure est alors agencée sensiblement horizontalement lorsque l'aéronef est posé sur un support horizontal et est suffisamment grande pour permettre à celle-ci de servir de marche pied. L'échancrure peut ainsi permettre à une personne de prendre appui dessus avec un pied ou deux pieds pour réaliser des opérations de maintenance sur une partie haute de l'aéronef.

Par ailleurs, différentes formes de jonctions peuvent être utilisées pour relier la face interne inférieure de l'échancrure et la face interne inclinée de l'échancrure.

Ainsi selon un premier exemple, une jonction entre la face interne inférieure de l'échancrure et la face interne inclinée de l'échancrure peut comporter un congé de raccordement.

Autrement dit, un tel congé de raccordement forme une face concave tangente à au moins l'une des deux faces définies par la face interne inférieure et la face interne inclinée.

Selon un second exemple, une jonction entre la face interne inférieure de l'échancrure et la face interne inclinée de l'échancrure peut comporter une arête de raccordement.

Dans ce cas, l'arête de raccordement est directement formée par l'intersection entre les deux faces définies par la face interne inférieure et la face interne inclinée.

En outre, différentes formes de jonctions peuvent également être utilisées pour relier la face interne inclinée de l'échancrure et la face externe supérieure de l'ailette.

Ainsi selon une première variante, une jonction entre la face interne inclinée de l'échancrure et la face externe supérieure de l'ailette peut comporter un arrondi tangent de raccordement.

En d'autres termes, et comme pour un congé de raccordement, un tel arrondi tangent de raccordement forme une face convexe tangente à au moins l'une des deux faces définies par la face interne inclinée de l'échancrure et la face externe supérieure de l'ailette.

Selon une seconde variante, une jonction entre la face interne inclinée de l'échancrure et la face externe supérieure de l'ailette peut comporter une arête de raccordement.

Dans ce cas, l'arête de raccordement est directement formée par l'intersection entre les deux faces définies par la face interne inclinée de l'échancrure et la face externe supérieure de l'ailette.

L'invention et ses avantages apparaîtront avec plus de détails dans le cadre de la description qui suit avec des exemples donnés à titre illustratif, mais non limitatif, en référence aux figures annexées dans lesquelles :
- la figure 1 représente une vue en perspective d'un aéronef conforme à l'invention,
- la figure 2 est une vue de côté en coupe d'une ailette de fuselage, conformément à l'invention,
- la figure 3 est une vue de face d'une ailette de fuselage, conformément à l'invention, et
- les figures 4 à 6 représentent trois modes de réalisation d'ailettes de fuselage, conformément à l'invention.

Les éléments présents dans plusieurs figures distinctes sont affectés d'une seule et même référence.

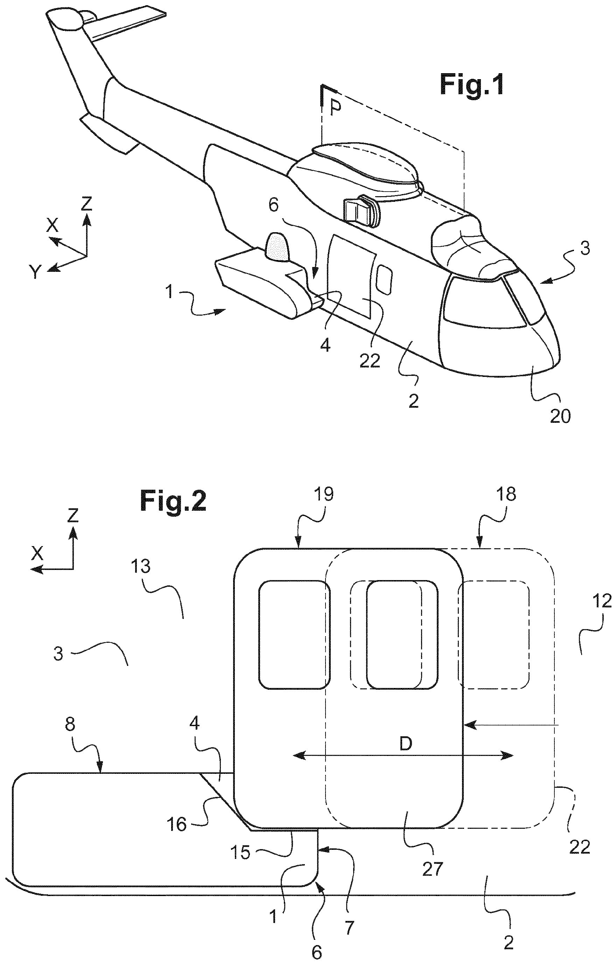

On note que trois axes X, Y et Z orthogonaux les uns par rapport aux autres sont représentés sur les figures 1 à 6.

L'axe X est dit longitudinal dans la mesure où il s'étend entre les extrémités avant et arrière de l'aéronef. Le terme « longueur » est relatif à une dimension longitudinale de l'aéronef selon cet axe longitudinal X.

Un axe Y est dit transversal. Le terme « largeur » est relatif à une dimension transversale de l'aéronef selon cet axe transversal.

Enfin, un troisième axe Z est dit d'élévation et correspond aux dimensions en hauteur des structures décrites. Le terme « profondeur » est alors relatif à une dimension en élévation de l'aéronef selon cet axe d'élévation. Cet axe Z est sensiblement vertical quand l'aéronef est posé sur un sol sensiblement horizontal.

Tel que représenté à la figure 1, un aéronef 20 comporte un corps principal 2 de fuselage 3 de plan antéropostérieur de symétrie P défini par les axes X et Z. Un tel plan P est ainsi vertical lorsque l'aéronef est agencé sur un support horizontal.

Par ailleurs, un tel aéronef 20 comporte au moins une ailette 1 de fuselage 3 émergeant transversalement du corps principal 2 du fuselage 3 selon l'axe Y. Une telle ailette 1 comporte en outre une zone de liaison 6 permettant de la solidariser avec le corps principal 2 du fuselage 3 et une échancrure 4 pour permettre le positionnement d'une porte coulissante 22 au niveau de l'ailette 1.

En effet et tel que représenté à la figure 2, la porte coulissante 22 peut se déplacer en translation selon une direction longitudinale D sensiblement parallèle à l'axe X. Ce mouvement de translation s'effectue entre une position fermée 18 de la porte coulissante 22 et une position ouverte 19 de la porte coulissante 22. De plus, la position fermée 18 est agencée au niveau d'une partie avant 12 du corps principal 2 et la position ouverte 19 est agencée au niveau d'une partie arrière 13 du corps principal 2.

Ainsi, lorsque la porte coulissante 22 se trouve en position ouverte 19, une portion inférieure 27 de cette porte vient se loger dans l'échancrure 4 de l'ailette 1. Une telle échancrure comporte alors une face interne inférieure 15 orientée sensiblement parallèlement à l'axe X et débouchant au niveau d'une face externe avant 7 de l'ailette 1.

Une telle échancrure 4 comporte également une face interne inclinée 16 et remontant vers la partie arrière 13 du corps principal 2. Cette face interne inclinée 16 s'étend quant à elle entre la face interne inférieure 15 et une face externe supérieure 8 de l'ailette 1.

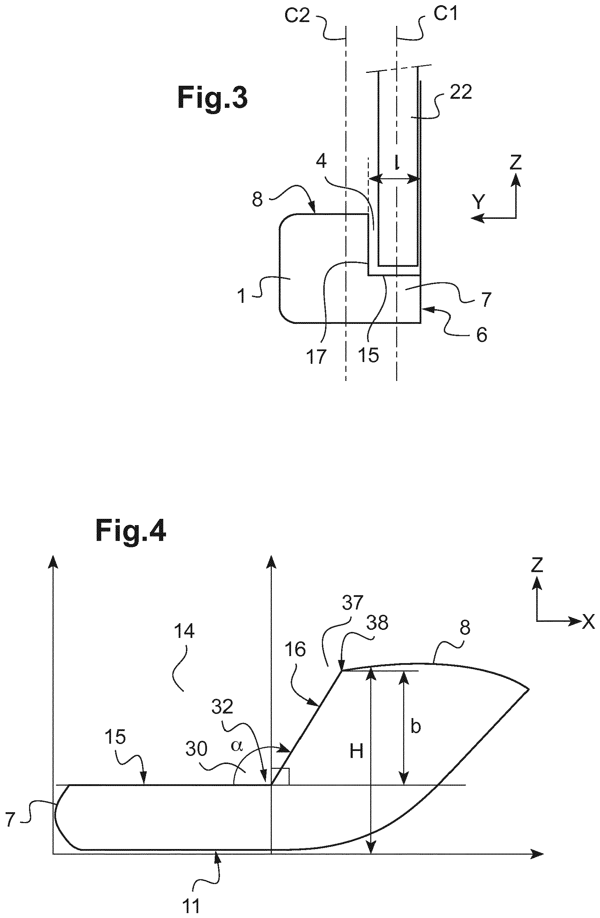

En outre et tel que représenté à la figure 3, l'échancrure 4 comporte également une cloison interne 17 formant un carénage pour éviter que de l'air extérieur ne pénètre à l'intérieur du volume défini par l'ailette 1. Une telle cloison interne 17 s'étend donc à la fois entre les deux faces internes 15 et 16 de l'échancrure 4 et les faces avant 7 et supérieure 8 de l'ailette 1.

De plus, une telle échancrure 4 présente au moins au niveau de la face externe avant 7 de l'ailette 1 une largeur I selon l'axe Y comprise entre 100mm et 350mm et par exemple égale à 170mm. Une telle largeur de l'échancrure 4 permet alors à l'ailette 1 de servir de marche pied pour faciliter des opérations de maintenance de l'aéronef 20.

En outre, des plans de coupe C1 et C2 parallèles au plan XZ sont représentés à la figure 3. Un premier plan de coupe C1 passe par l'échancrure 4 de l'ailette 1 tandis qu'un second plan de coupe C2 passe en dehors l'échancrure 4.

Par ailleurs telles que représentées aux figures 4 à 6 différents modes de réalisation d'ailettes 11, 21, 31 sont envisagés représentant trois combinaisons combinant trois alternatives de forme des faces internes latérales 16, 26, 36, un premier exemple et un deuxième exemple de jonctions 30, 40, 41 entre la face interne inférieure 15, 25, 35 et la face interne inclinée 16, 26, 36 ainsi qu'une première variante et une deuxième variante de jonctions 37, 45, 47 entre la face interne inclinée 16, 26, 36 et la face externe supérieure 8.

Bien entendu, l'invention ne se limite pas à ces trois combinaisons données à titre indicatif mais non limitatif. L'invention se rapporte donc à toute autre combinaison des trois alternatives de forme des faces internes latérales 16, 26, 36, des deux exemples de jonctions 30, 40, 41 entre la face interne inférieure 15, 25, 35 et la face interne inclinée 16, 26, 36 ainsi que des deux variantes de jonctions 37, 45, 47 entre la face interne inclinée 16, 26, 36 et la face externe supérieure 8.

Ainsi selon un premier mode de réalisation de l'ailette 11 tel que représenté dans le premier plan de coupe C1 à la figure 4, la face interne inclinée 16 de l'échancrure 14 comporte une section longitudinale de forme rectiligne conformément à une première alternative pour la forme de la face interne inclinée 16. Son inclinaison d'un angle α par rapport à la face interne inférieure 15 est donc directement formée par l'écart angulaire séparant ces deux faces 15 et 16.

Par ailleurs, une jonction 30 entre la face interne inférieure 15 et la face interne inclinée 16 est ici représentée sous la forme d'une arête de raccordement 32 conformément au second exemple de jonction 30 entre la face interne inférieure 15 et la face interne inclinée 16. De même, une jonction 37 entre la face interne inclinée 16 et la face externe supérieure 8 de l'ailette 11 est représentée sous la forme d'une arête de raccordement 38 conformément à la seconde variante de jonction 37 entre la face interne inclinée 16 et la face externe supérieure 8.

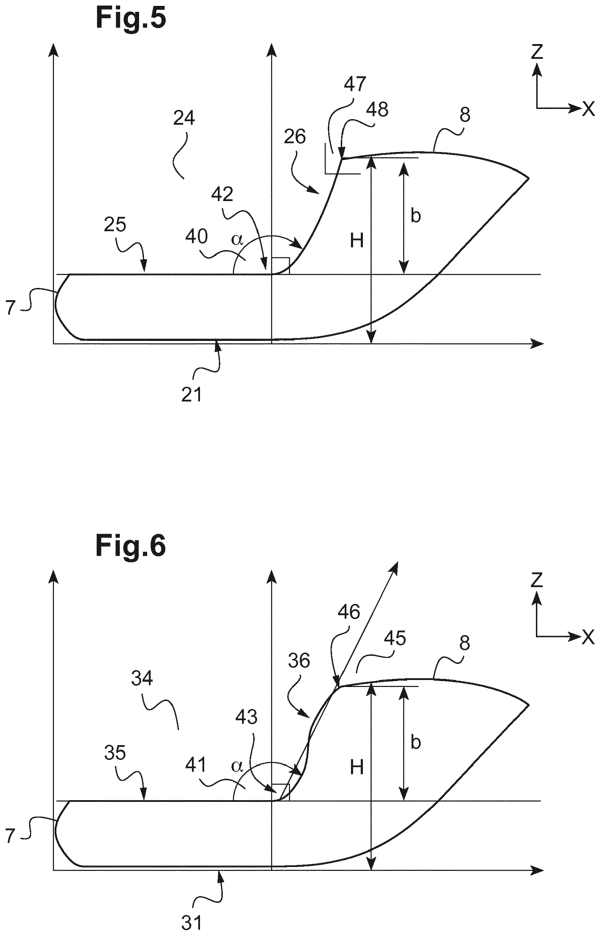

Dans un deuxième mode de réalisation de l'ailette 21 tel que représenté dans le premier plan de coupe C1 à la figure 5, la face interne inclinée 26 de l'échancrure 24 comporte une section longitudinale de forme concave, conformément à une deuxième alternative pour la forme de la face interne inclinée 26, qui peut être par exemple parabolique. L'inclinaison d'un angle α de la face interne inclinée 26 par rapport à la face interne inférieure 25 est donc formée par l'écart angulaire séparant la face interne inférieure 25 et la direction rectiligne correspondant à la moyenne des points de la face interne inclinée 26.

Par ailleurs, une jonction 40 entre la face interne inférieure 25 et la face interne inclinée 26 est ici représentée sous la forme d'un congé de raccordement 42 selon le premier exemple de jonction 40 entre la face interne inférieure 25 et la face interne inclinée 26. Une jonction 47 entre la face interne inclinée 26 et la face externe supérieure 8 de l'ailette 21 est quant à elle représentée sous la forme d'une arête de raccordement 38 conformément à la seconde variante de jonction 47 entre la face interne inclinée 26 et la face externe supérieure 8.

Enfin dans un troisième mode de réalisation de l'ailette 31 tel que représenté dans le premier plan de coupe C1 à la figure 6, la face interne inclinée 36 de l'échancrure 34 comporte une section longitudinale de forme complexe, conformément à une troisième alternative pour la forme de la face interne inclinée 36. Une telle forme complexe peut par exemple être sinusoïdale.

Dans ce cas comme pour le deuxième mode de réalisation de l'ailette 21, l'inclinaison d'un angle α de la face interne inclinée 36 par rapport à la face interne inférieure 35 est donc formée par l'écart angulaire séparant la face interne inférieure 35 et la direction rectiligne correspondant la moyenne des points de la face interne inclinée 36.

Par ailleurs, une jonction 41 entre la face interne inférieure 35 et la face interne inclinée 36 est ici représentée sous la forme d'un congé de raccordement 43 selon le premier exemple de jonction 41 entre la face interne inférieure 35 et la face interne inclinée 36.

De même, une jonction 45 entre la face interne inclinée 36 et la face externe supérieure 8 de l'ailette 31 est représentée sous la forme d'un arrondi tangent de raccordement 46 conformément à la première variante de jonction 45 entre la face interne inclinée 36 et la face externe supérieure 8.

Au surplus et tel que représentée dans les trois modes de réalisation d'ailettes 11, 21, 31, la profondeur b selon l'axe Z de l'échancrure 14, 24, 34 est avantageusement choisie sensiblement égale à 80 % de la hauteur totale H de l'ailette 11, 21, 31 mesurée dans le second plan de coupe C2.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (20) comportant :
• un corps principal (2) d'un fuselage (3),
• au moins une porte latérale coulissante (22) apte à se déplacer en translation selon une direction longitudinale D, ladite porte latérale coulissante (22) étant mobile entre une position fermée (18) agencée vers une partie avant (12) du corps principal (2) dudit fuselage (3) et une position ouverte (19) agencée vers une partie arrière (13) du corps principal (2) dudit fuselage (3),
• au moins une ailette (1, 11, 21, 31) émergeant transversalement dudit corps principal (2) dudit fuselage (3) sensiblement perpendiculairement par rapport à un plan antéropostérieur vertical de symétrie P dudit corps principal (2) dudit fuselage (3) lorsque ledit aéronef (20) est posé sur un support horizontal, ladite au moins une ailette (1, 11, 21, 31) comportant une échancrure (4, 14, 24, 34) réduisant localement une section transversale de ladite au moins une ailette (1, 11, 21, 31) dans une zone de liaison (6) de ladite au moins une ailette (1, 11, 21, 31), ladite zone de liaison (6) étant agencée à proximité immédiate dudit corps principal (2) dudit fuselage (3) de l'aéronef (20) d'où ladite au moins une ailette (1, 11, 21, 31) émerge transversalement, ladite échancrure (4, 14, 24, 34) étant ouverte au moins au niveau d'une face externe avant (7) et d'une face externe supérieure (8) de ladite au moins une ailette (1, 11, 21, 31) et permettant de recevoir une portion inférieure (27) de ladite porte latérale coulissante (22) agencée en position ouverte (19),
**caractérisé en ce que** ladite échancrure (4, 14, 24, 34) de ladite au moins une ailette (1, 11, 21, 31) comporte :
• une face interne inférieure (15, 25, 35) orientée sensiblement horizontalement lorsque ledit aéronef (20) est posé sur un support horizontal et débouchant au niveau de ladite face externe avant (7) de ladite au moins une ailette (1, 11, 21, 31),
• une face interne inclinée (16, 26, 36) vers l'arrière dudit fuselage (3) de l'aéronef (20) et s'entendant entre ladite face interne inférieure (15, 25, 35) et ladite face externe supérieure (8) de ladite au moins une ailette (1, 11, 21, 31), et
• une cloison interne (17) agencée sensiblement parallèlement audit corps principal (2) en regard, et coopérant, d'une part avec ladite face interne inférieure (15, 25, 35) et ladite face interne inclinée (16, 26, 36) et, d'autre part avec ladite face externe avant (7) et ladite face externe supérieure (8) de ladite au moins une ailette (1, 11, 21, 31).

2. Aéronef selon la revendication 1,
**caractérisé en ce que** ladite face interne inclinée (16, 26, 36) est inclinée par rapport à ladite face interne inférieure (15, 25, 35) d'un angle résultant moyen α compris entre 120° et 150° mesuré dans un plan sensiblement parallèle au plan antéropostérieur vertical de symétrie P.

3. Aéronef selon l'une quelconque des revendications 1 à 2,
**caractérisé en ce que** ladite face interne inclinée (16) de ladite échancrure (4, 14) comporte une section longitudinale de forme rectiligne.

4. Aéronef selon l'une quelconque des revendications 1 à 2,
**caractérisé en ce que** ladite face interne inclinée (26) de ladite échancrure (24) comporte une section longitudinale de forme concave.

5. Aéronef selon l'une quelconque des revendications 1 à 2,
**caractérisé en ce que** ladite face interne inclinée (36) de ladite échancrure (34) comporte une section longitudinale de forme complexe.

6. Aéronef selon l'une quelconque des revendications 1 à 5,
**caractérisé en ce que** ladite échancrure (14, 24, 34) présente une profondeur b, selon un axe Z vertical, comprise entre 25% et 95% de la hauteur totale H selon l'axe Z de ladite au moins une ailette (11, 21, 31) au niveau d'une autre section longitudinale relative à ladite au moins une ailette (11, 21, 31) excluant ladite échancrure (14, 24, 34).

7. Aéronef selon l'une quelconque des revendications 1 à 6,
**caractérisé en ce que** ladite échancrure (4, 14, 24, 34) présente, au moins au niveau de la face externe avant 7 de ladite au moins une ailette (1, 11, 21, 31), une largeur l, selon un axe Y transversal, comprise entre 100mm et 350mm.

8. Aéronef selon l'une quelconque des revendications 1 à 7,
**caractérisé en ce qu'**une jonction (40, 41) entre ladite face interne inférieure (25, 35) de ladite échancrure (24, 34) et ladite face interne inclinée (26, 36) de ladite échancrure (24, 34) comporte un congé de raccordement (42, 43).

9. Aéronef selon l'une quelconque des revendications 1 à 7,
**caractérisé en ce qu'**une jonction (30) entre ladite face interne inférieure (15) de ladite échancrure (14) et ladite face interne inclinée (16) de ladite échancrure (14) comporte une arête de raccordement (32).

10. Aéronef selon l'une quelconque des revendications 1 à 9,
**caractérisé en ce qu'**une jonction (45) entre ladite face interne inclinée (36) de ladite échancrure (34) et ladite face externe supérieure (8) de ladite au moins une ailette (31) comporte un arrondi tangent de raccordement (46).

11. Aéronef selon l'une quelconque des revendications 1 à 9,
**caractérisé en ce qu'**une jonction (37, 47) entre ladite face interne inclinée (16, 26) de ladite échancrure (14, 24) et ladite face externe supérieure (8) de ladite au moins une ailette (11, 21) comporte une arête de raccordement (38, 48).

## Patentansprüche

1. Luftfahrzeug (20) mit:
• einem Hauptkörper (2) eines Rumpfes (3),
• mindestens einer seitlichen Schiebetür (22), die sich translatorisch in einer Längsrichtung D bewegen kann, wobei die seitliche Schiebetür (22) beweglich ist zwischen einer geschlossenen Stellung (18), die zu einem vorderen Teil (12) des Hauptkörpers (2) des Rumpfes (3) hin angeordnet ist, und einer offenen Stellung (19), die zu einem hinteren Teil (13) des Hauptkörpers (2) des Rumpfes (3) hin angeordnet ist,
• mindestens einem Flügel (1, 11, 21, 31), der quer zu dem Hauptkörper (13) des Rumpfes (3) im Wesentlichen senkrecht zu einer anteroposterioren senkrechten Symmetrieebene P des Hauptkörpers (2) des Rumpfes (3) herausragt, wenn das Luftfahrzeug (20) auf einen horizontalen Untergrund gestellt ist, wobei der mindestens eine Flügel (1, 11, 21, 31) eine Einbuchtung (4, 14, 24, 34) aufweist, die lokal einen Querschnitt des mindestens einen Flügels (1, 11, 21, 31) in einem Verbindungsbereich (6) des mindestens einen Flügels (1, 11, 21, 31) reduziert, wobei der Verbindungsbereich (6) in unmittelbarer Nähe des Hauptkörpers (2) des Rumpfes (3) des Luftfahrzeugs (20) angeordnet ist, von dem aus der mindestens eine Flügel (1, 11, 21, 31) in Querrichtung herausragt, wobei die Einbuchtung (4, 14, 24, 34) mindestens auf der Höhe einer vorderen Außenseite (7) und auf der Höhe einer oberen Außenseite (8) des mindestens einen Flügels (1, 11, 21, 31) offen ist, und es erlaubt, einen unteren Teil (27) der seitlichen Schiebetür (22) in deren offener Stellung (19) aufzunehmen,
**dadurch gekennzeichnet, dass** die Einbuchtung (4, 14, 24, 34) des mindestens einen Flügels (1, 11, 21, 31) aufweist:
• eine untere Innenseite (15, 25, 35), die im Wesentlichen horizontal angeordnet ist, wenn das Luftfahrzeug (20) auf einen horizontalen Untergrund gestellt ist, und auf der Höhe der äußeren Vorderseite (7) des mindestens einen Flügels (1, 11, 21, 31) mündet,
• eine Innenseite (16, 26, 36), die zum hinteren Teil des Rumpfes (3) des Luftfahrzeugs (20) hin geneigt ist und sich zwischen der unteren Innenseite (15, 25, 35) und der oberen Außenseite (8) des mindestens einen Flügels (1, 11, 21, 31) erstreckt, und
• eine Innenwand (17), die im Wesentlichen parallel zu dem Hauptkörper (2) diesem gegenüber angeordnet ist und einerseits mit der unteren Innenseite (15, 25, 35) und der geneigten Innenseite (16, 26, 36) und andererseits mit der vorderen Außenseite (7) und der oberen Außenseite (8) des mindestens einen Flügels (1, 11, 21, 31) zusammenwirkt.

2. Luftfahrzeug nach Anspruch 1,
**dadurch gekennzeichnet, dass** die geneigte Innenseite (16, 26, 36) relativ zu der unteren Innenseite (15, 25, 35) mit einem mittleren resultierenden Winkel (α) geneigt ist, der zwischen 120° und 150° liegt, gemessen in einer Ebene, die im Wesentlichen parallel zu der anteroposterioren vertikalen Symmetrieebene P ist.

3. Luftfahrzeug nach einem der Ansprüche 1 bis 2,
**dadurch gekennzeichnet, dass** die geneigte Innenseite (16) der Einbuchtung (4, 14) einen geradlinigen Längsschnitt aufweist.

4. Luftfahrzeug nach einem der Ansprüche 1 bis 2,
**dadurch gekennzeichnet, dass** die geneigte Innenseite (26) der Einbuchtung (24) einen konkaven Längsschnitt aufweist.

5. Luftfahrzeug nach einem der Ansprüche 1 bis 2,
**dadurch gekennzeichnet, dass** die geneigte Innenseite (36) der Einbuchtung (34) einen Längsschnitt komplexer Form aufweist.

6. Luftfahrzeug nach einem der Ansprüche 1 bis 5,
**dadurch gekennzeichnet, dass** die Einbuchtung (14, 24, 34) eine Tiefe b entlang einer vertikalen Z-Achse aufweist, die zwischen 25% und 95% der Gesamthöhe H entlang der Z-Achse des mindestens einen Flügels (11, 21, 31) beträgt, auf der Höhe eines anderen Längsschnittes bezüglich des mindestens einen Flügels (11, 21, 31), der die Einbuchtung (14, 24, 34) ausschließt.

7. Luftfahrzeug nach einem der Ansprüche 1 bis 6,
**dadurch gekennzeichnet, dass** die Einbuchtung (4, 14, 24, 34) mindestens auf der Höhe der vorderen Außenseite (7) des mindestens einen Flügels (1, 11, 21, 31) eine Breite I in Richtung einer quer verlaufenden Y-Achse aufweist, die zwischen 100 mm und 350 mm beträgt.

8. Luftfahrzeug nach einem der Ansprüche 1 bis 7,
**dadurch gekennzeichnet, dass** ein Übergang (40 ,41) zwischen der unteren Innenseite (25, 35) der Einbuchtung (24, 34) und der geneigten Innenseite (26, 36) der Einbuchtung (24, 34) einen Übergangsradius (42, 43) aufweist.

9. Luftfahrzeug nach einem der Ansprüche 1 bis 7,
**dadurch gekennzeichnet, dass** ein Übergang (30) zwischen der unteren Innenseite (15) der Einbuchtung (14) und der geneigten Innenseite (16) der Einbuchtung (14) eine Übergangskante (32) aufweist.

10. Luftfahrzeug nach einem der Ansprüche 1 bis 9,
**dadurch gekennzeichnet, dass** ein Übergang (45) zwischen der geneigten Innenseite (36) der Einbuchtung (34) und der oberen Außenseite (8) des mindestens einen Flügels (31) eine tangentiale Übergangsrundung aufweist.

11. Luftfahrzeug nach einem der Ansprüche 1 bis 9,
**dadurch gekennzeichnet, dass** ein Übergang (37, 47) zwischen der geneigten Innenseite (16, 26) der Einbuchtung (14, 24) und der oberen Außenseite (8) des mindestens einen Flügels (11, 21) eine Übergangskante (38, 48) aufweist.

## Claims

1. Aircraft (20), comprising:
• a main body (2) of a fuselage (3),
• at least one sliding side door (22) capable of moving in translation in a longitudinal direction D, said sliding side door (22) being movable between a closed position (18) in which said door is arranged towards a front part (12) of the main body (2) of said fuselage (3) and an open position (19) in which said door is arranged towards a rear part (13) of the main body (2) of said fuselage (3),
• at least one fin (1, 11, 21, 31) emerging transversely from said main body (2) of said fuselage (3) substantially perpendicularly with respect to a vertical anteroposterior plane of symmetry P of said main body (2) of said fuselage (3) when said aircraft (20) is positioned on a horizontal base, said at least one fin (1, 11, 21, 31) comprising a cutout (4, 14, 24, 34) that locally reduces a cross section of said at least one fin (1, 11, 21, 31) in a junction region (6) of said at least one fin (1, 11, 21, 31), said junction region (6) being arranged in the immediate vicinity of said main body (2) of said fuselage (3) of the aircraft (20), from which main body said at least one fin (1, 11, 21, 31) emerges transversely, said cutout (4, 14, 24, 34) being open at least in the region of an outer front face (7) and an outer top face (8) of said at least one fin (1, 11, 21, 31) and enabling a bottom portion (27) of said sliding side door (22) arranged in the open position (19) to be received,
**characterized in that** said cutout (4, 14, 24, 34) of said at least one fin (1, 11, 21, 31) comprises:
• an inner bottom face (15, 25, 35) oriented substantially horizontally when said aircraft (20) is positioned on a horizontal base and opening in the region of said outer front face (7) of said at least one fin (1, 11, 21, 31),
• an inner face (16, 26, 36) inclined towards the rear of said
fuselage (3) of the aircraft (20) and extending between said inner bottom face (15, 25, 35) and said outer top face (8) of said at least one fin (1, 11, 21, 31), and
• an inner wall (17) arranged substantially in parallel with and opposite said main body (2) and engaging with said inner bottom face (15, 25, 35) and said inclined inner face (16, 26, 36), as well as with said outer front face (7) and said outer top face (8) of said at least one fin (1, 11, 21, 31).

2. Aircraft according to claim 1,
**characterized in that** said inclined inner face (16, 26, 36) is inclined relative to said inner bottom face (15, 25, 35) by an average resulting angle α of between 120° and 150° measured in a plane that is substantially parallel to the vertical anteroposterior plane of symmetry P.

3. Aircraft according to either claim 1 or claim 2,
**characterized in that** said inclined inner face (16) of said cutout (4, 14) comprises a rectilinear longitudinal section.

4. Aircraft according to either claim 1 or claim 2,
**characterized in that** said inclined inner face (26) of said cutout (24) comprises a concave longitudinal section.

5. Aircraft according to either claim 1 or claim 2,
**characterized in that** said inclined inner face (36) of said cutout (34) comprises a complex longitudinal section.

6. Aircraft according to any of claims 1 to 5,
**characterized in that** said cutout (14, 24, 34) has a depth b, along a vertical axis Z, of between 25% and 95% of the total height H along the axis Z of said at least one fin (11, 21, 31) in the region of another longitudinal section relative to said at least one fin (11, 21, 31) excluding said cutout (14, 24, 34).

7. Aircraft according to any of claims 1 to 6,
**characterized in that** said cutout (4, 14, 24, 34) has, at least in the region of the outer front face 7 of said at least one fin (1, 11, 21, 31), a width I, along a transverse axis Y, of between 100 mm and 350 mm.

8. Aircraft according to any of claims 1 to 7,
**characterized in that** a joint (40, 41) between said inner bottom face (25, 35) of said cutout (24, 34) and said inclined inner face (26, 36) of said cutout (24, 34) comprises a fillet (42, 43).

9. Aircraft according to any of claims 1 to 7,
**characterized in that** a joint (30) between said inner bottom face (15) of said cutout (14) and said inclined inner face (16) of said cutout (14) comprises a connecting edge (32).

10. Aircraft according to any of claims 1 to 9,
**characterized in that** a joint (45) between said inclined inner face (36) of said cutout (34) and said outer top face (8) of said at least one fin (31) comprises a curved tangent transition (46).

11. Aircraft according to any of claims 1 to 9,
**characterized in that** a joint (37, 47) between said inclined inner face (16, 26) of said cutout (14, 24) and said outer top face (8) of said at least one fin (11, 21) comprises a connecting edge (38, 48).
